Europäisches Patentamt

European Patent Office

Office européen des brevets

(19)

(11) Numéro de publication: **0 258 114 B1**

(12) **FASCICULE DE BREVET EUROPEEN**

(45) Date de publication du fascicule du brevet:
04.10.89

(51) Int. Cl.⁴: **F16F 15/12,** F16D 13/71, F16D 3/66

(21) Numéro de dépôt: **87401805.4**

(22) Date de dépôt: **03.08.87**

(54) **Dispositif amortisseur de torsion pour système de transmission de couple.**

(30) Priorité: **21.08.86 FR 8611937**

(43) Date de publication de la demande:
**02.03.88 Bulletin 88/9**

(45) Mention de la délivrance du brevet:
**04.10.89 Bulletin 89/40**

(84) Etats contractants désignés:
**DE ES GB IT**

(56) Documents cités:
**FR-A- 2 532 704**
**FR-A- 2 571 461**
**FR-A- 2 583 486**
**GB-A- 2 089 472**

(73) Titulaire: **VALEO, 64 Avenue de la Grande Armée,
F-75017 Paris(FR)**

(72) Inventeur: **Després, Dominique, 24 rue du Général
Roguet, F-92110 Clichy(FR)**
Inventeur: **Paquin, Jacques, 83, Avenue de Verdun,
F-92390 Villeneuve-la-Garenne(FR)**

(74) Mandataire: **CABINET BONNET-THIRION, 95 Boulevard
Beaumarchais, F-75003 Paris(FR)**

## Description

L'invention se rapporte à un dispositif amortisseur de torsion pour système de transmission de couple, tel qu'un embrayage; elle concerne plus particulièrement des perfectionnements apportés à certains éléments de deux parties coaxiales montées avec possibilité de rotation limitée l'une par rapport à l'autre.

Un système de transmission de couple tel qu'un embrayage à friction, destiné à être intercalé entre le vilebrequin du moteur et l'arbre d'entrée de la boîte de vitesses, dans un véhicule automobile, comporte très généralement un dispositif amortisseur de torsion susceptible d'absorber les variations de ce couple, pour éviter que des vibrations et en particulier des vibrations sonores ne prennent naissance tout au long de la chaîne cinématique dans laquelle ledit dispositif amortisseur de torsion est inséré. Un tel dispositif amortisseur est par exemple combiné au disque de friction de l'embrayage ou au volant d'inertie entraîné par le vilebrequin du moteur et faisant également fonction de plateau de réaction pour l'embrayage.

Ainsi, le brevet français N° 2571461 décrit un tel dispositif amortisseur combiné à un volant d'inertie. Le volant comprend deux parties coaxiales entre lesquelles sont agencés des ressorts hélicoïdaux disposés circonférentiellement. Plus précisément, chaque ressort est maintenu entre des socles montés articulés entre deux flasques (autrement appelés rondelles de guidage) d'une première partie, en l'occurrence la partie menante, tandis que ces mêmes socles sont susceptibles d'être sollicités circonférentiellement avec possibilité d'articulation, par des voiles annulaires en tôle solidaires de la partie menée, la variation de compression des ressorts assurant l'absorption des variations de couple et un certain filtrage des vibrations de toutes sortes.

Ce système donne de bons résultats, principalement en raison de la présence des socles articulés qui permettent aux ressorts de fonctionner dans de meilleures conditions en évitant qu'ils ne soient soumis à des déformations radiales excessives, vers l'intérieur ou l'extérieur. Cependant, les chocs entre les socles d'une part et les flasques et voiles d'autre part sont relativement audibles. En outre, lesdits socles étant en matière plastique moulée, les parties des flasques et voiles qui coopèrent avec lesdits socles doivent faire l'objet d'un découpage précis, exempt de toute bavure, pour ne pas provoquer une détérioration des zones des socles avec lesquelles elles s'articulent. La fabrication des flasques et des voiles est donc relativement coûteuse, puisqu'elle ne peut consister en un simple découpage à l'emporte-pièce.

L'un des buts de l'invention est de réduire les bruits de fonctionnement dans un tel amortisseur de torsion.

Un autre but de l'invention est de permettre de réaliser les flasques et voiles de cet amortisseur de torsion à moindre coût.

Dans ces buts, l'invention concerne donc un dispositif amortisseur de torsion, notamment dans un embrayage, du type comportant deux parties coaxiales montées avec possibilité de rotation limitée l'une par rapport à l'autre, une première partie comportant deux flasques annulaires sensiblement parallèles et une seconde partie comportant au moins un voile intercalé axialement entre les deux flasques et des ressorts disposés sensiblement circonférentiellement entre des socles montés sur l'une des parties, chaque socle comportant des premiers moyens d'engagement coopérant avec des moyens d'engagement complémentaires de l'une des parties et des seconds moyens d'engagement coopérant avec des moyens d'engagement complémentaires de l'autre partie, caractérisé en ce que lesdits moyens d'engagement complémentaires des flasques et/ou du ou des voiles sont constitués par des pièces rapportées en élastomère ou en matériau synthétique, par exemple en matière plastique moulée relativement rigide.

Les bruits de fonctionnement sont réduits par le fait que les parties qui entrent en contact avec les socles ne sont plus en métal mais en matériau moins "sonore". En outre, la surface de contact entre ces éléments rapportés et les socles peut être notablement augmentée par rapport à ce qu'elle était antérieurement, lorsque les flasques et les voiles coopéraient avec lesdits socles uniquement par leur tranche. Enfin, il devient facile d'obtenir des surfaces d'articulation de bonne qualité, au moulage des pièces rapportées, ces dernières pouvant être fixées sans inconvénient à des parties des voiles et/ou flasques présentant des bords provenant d'un découpage non rectifié.

L'invention sera mieux comprise et d'autres avantages de celle-ci apparaîtront plus clairement à la lumière de la description qui va suivre d'un dispositif amortisseur de torsion conforme à son principe, donnée uniquement à titre d'exemple et faite en référence aux dessins annexés dans lesquels:

- la figure 1 est une vue d'ensemble du dispositif amortisseur de torsion représenté selon la coupe I-I de la figure 2;
- la figure 2 est une vue partielle et avec arrachement du même dispositif vu selon la flèche II de la figure 1;
- la figure 3 est une vue partielle avec arrachement, selon la flèche III de la figure 2 et illustrant plus particulièrement les voiles de la seconde partie précitée; et
- la figure 4 est une coupe partielle IV-IV de la figure 2 montrant plus particulièrement les moyens de l'invention au niveau d'un flasque de la première partie précitée.

En se reportant aux dessins, on a représenté plus particulièrement un volant d'inertie formant amortisseur de torsion 11, pour transmission de véhicule automobile, ce volant comportant une surface annulaire de contact 12 propre à lui faire jouer le rôle supplémentaire de plateau de réaction dans un embrayage à friction. A ce titre, le volant 11 est destiné à être fixé par son moyeu 13 au vilebrequin du moteur à combustion interne du véhicule automobile. Il comporte deux parties coaxiales 15 et 16, qui seront respectivement appelées ci-dessous première et seconde parties, montées avec possibilité de rotation limitée l'une par rapport à l'autre à l'encontre, notamment, de la force exercée circonférentiellement entre elles par des ressorts hélicoïdaux 18. La première partie 15 ou partie menante, dont fait partie le moyeu 13, comporte deux flasques annulaires 19, 20, métalliques, communément appelés "rondelles de guidage". Le flasque 19 est fixé au moyeu 13. Le flasque 20, parallèle au flasque 19 est fixé extérieurement à celui-ci avec interposition d'une entretoise annulaire massive 22 portant la couronne de démarreur. Des fenêtres 23 allongées sont définies dans ces flasques, elles s'étendent circonférentiellement. Chaque fenêtre d'un flasque est en regard d'une fenêtre symétrique de l'autre flasque de façon à définir des logements propres à abriter les ressorts 18. Chaque ressort 18 est monté dans un tel logement par l'intermédiaire de deux socles d'extrémité 24. Chaque socle 24 comporte des premiers moyens d'engagement coopérant avec des moyens d'engagement complémentaires des flasques 19 et 20. Dans l'exemple décrit, chaque socle comporte ainsi deux tourillons latéraux 25 admettant un axe commun parallèle à l'axe de rotation du volant amortisseur tandis que les bords sensiblement radiaux des fenêtres 23 sont pourvus d'encoches arrondies 26 recevant les tourillons 25 du socle correspondant. En pratique également, le centre de chaque extrémité du ressort 18 est positionné plus près de l'axe de rotation que le centre de rotation du tourillon 25.

La seconde partie 16 est montée en rotation sur le moyeu 13 par un roulement à billes 34 et se compose d'une pièce annulaire 35, formant une sorte de moyeu et d'un plateau 36, fixé à la pièce annulaire 35 par des vis 37. Ce plateau constitue plus particulièrement le plateau de réaction de l'embrayage puisque sa face radiale externe forme la surface annulaire de contact 12 sur laquelle vient s'appliquer la friction d'embrayage (non représentée).

D'autre part, la pièce annulaire 35 et le plateau 36 comportent des portées annulaires radiales respectives, 35a, 36a parallèles tandis que deux voiles parallèles 38, 39, en tôle découpée, sont engagés dans l'espace défini par ces deux portées annulaires et repoussés axialement vers celles-ci, respectivement, par des moyens élastiques à action axiale, ici en l'occurrence deux rondelles Belleville 40, 41. Ici, la portée 35a est formée à la faveur d'une bride s'étendant radialement en direction de l'entretoise 22, que possède la pièce 35 qui, par ailleurs, centre les voiles 38, 39. Chaque voile porte une garniture de friction annulaire 45 par laquelle il est en contact frottant avec la portée annulaire radiale correspondante. Les voiles 38, 39 intercalés axialement entre les deux flasques 19, 20 sont susceptibles de coopérer avec les socles 24 des ressorts (d'une façon qui sera décrite plus en détail ci-dessous) et l'agencement qui vient d'être décrit constitue un limiteur de couple autorisant un glissement rotatif entre lesdites première et seconde parties coaxiales, lorsque le couple transmis dépasse une valeur prédéterminée. Chaque voile 38, 39 comporte une partie annulaire plate portant les garnitures 45, prolongée vers l'extérieur par des bras radiaux 48 (autant que de ressorts) assujettis à se déplacer circonférentiellement entre les ressorts. Chaque socle comporte donc des seconds moyens d'engagement sous forme d'une creusure 55 à fond arrondi ouvrant entre les deux tourillons 25 et coopérant avec des moyens d'engagement complémentaires de cette seconde partie, à savoir des doigts 49, s'étendant sensiblement circonférentiellement, portés par les bras 48. Ces doigts sont spécifiques de l'invention et seront décrits en détail plus loin. Les socles 24 sont en matière plastique moulée mais portent des blocs de matériau élastomère 56 servant de butées élastiques en cas de surcouples aboutissant à une compression excessive des ressorts.

En pratique, la creusure 55 s'ouvre sensiblement au milieu de la face arrière du socle 24 et des facettes inclinées l'une par rapport à l'autre sont définies de part et d'autre de ladite creusure 55.

Entre lesdites facettes et les tourillons 25 sont définis des talons, l'écartement entre deux talons correspondant à la largeur de la creusure.

Comme le montrent les dessins, les ressorts n'interviennent pas dès le début du débattement angulaire entre les deux parties coaxiales, puisque les bras radiaux doivent effectuer une certaine course angulaire avant que certains de leurs doigts ne s'engagent dans les creusures des socles correspondants. Avant l'engagement desdits doigts au fond desdits socles, des moyens de frottement 60 (intervenant quant à eux dès le début du débattement angulaire entre les deux parties coaxiales) sont prévus entre lesdites parties coaxiales. Ces moyens de frottement se composent d'une rondelle de frottement 62 et d'une rondelle Belleville 66 formant ressort. La rondelle de frottement 62 est immobilisée en rotation par rapport à la première partie 15 par des pattes axiales 63 engagées dans des trous du flasque 19. Elle porte une garniture de friction 64 appliquée axialement contre un épaulement 65 de la pièce annulaire 35 de la seconde partie 16. La rondelle de frottement est sollicitée vers ledit épaulement par la rondelle Belleville 66 prenant appui entre celle-ci et le flasque 19.

Selon l'invention, les moyens d'engagement complémentaires des flasques et/ou du ou des voiles sont constitués par des pièces rapportées en matériau élastomère ou synthétique, par exemple en matière plastique moulée relativement rigide. Ainsi, pour ce qui concerne les flasques 19, 20, on a prévu des premières pièces 70 en matériau synthétique, rapportées sur des portions radiales 72 desdits flasques pour définir les bords sensiblement radiaux des fenêtres 23. Les encoches arrondies 26 sont donc définies dans ces premières pièces 70, ce qui simplifie la fabrication des flasques 19,20. Celles-ci sont sensiblement plus épaisses que les flasques auxquels elles sont fixées, notamment au voisinage d'une encoche arrondie de sorte que la surface totale d'articulation entre encoches 26 et tourillons 25 d'un socle 24 quelconque, se trouve notablement augmentée. Il en résulte de meilleures conditions de travail pour les socles. De plus, l'état de surface de la tranche des encoches 26, résultant du moulage, est excellent. Enfin, l'épaisseur des flasques 19, 20 peut être réduite puisqu'ils n'interviennent plus dans la surface de contact avec les socles.

Comme cela apparaît clairement à la figure 2, chaque première pièce 70 précitée est en fait commune à deux fenêtres 23 adjacentes d'un même flasque. Elle comporte ainsi deux parties opposées 74a, 74b relativement épaisses (munies, chacune, d'une encoche 26 correspondant respectivement à deux fenêtres adjacentes 23 du flasque) et une partie centrale de montage 76 comportant ici une zone en creux ou amincie de forme et dimensions correspondant à celles d'une portion radiale 72 pour pouvoir s'encastrer sur celle-ci. La partie centrale 76 est fixée à la portion radiale 72 par un rivet 78. Au voisinage de chaque encoche arrondie 26 est défini un décrochement 75 dans l'épaisseur de ladite première pièce, pour le passage de la face arrière du socle 24 correspondant. La face radiale du décrochement 75 est sensiblement dans le prolongement de la face interne du flasque, pour continuité de guidage du socle lorsqu'il quitte ses appuis 25, 26. Ainsi, en conformant en conséquence (c'est-à-dire en fonction de la forme du socle) les bords de ladite première pièce au voisinage des encoches 26, on peut augmenter sensiblement la surface de contact en fin d'articulation entre chaque socle et la première pièce 70, plus précisément entre cette dernière et le talon précité, ce qui réduit l'usure de ces pièces tout en atténuant le bruit. Les découpes définissant les fenêtres 23 dans les flasques 19, 20 sont prolongées circonférentiellement pour permettre l'encastrement des parties 74a, 74b dans l'épaisseur du flasque, de façon à définir les extrémités circonférentielles des fenêtres 23. De plus, chaque première pièce 70 admet un plan de symétrie médian, ce qui permet de ne disposer que d'un seul type de pièce, en fabrication, susceptible d'être monté indifféremment sur le flasque 19 ou 20.

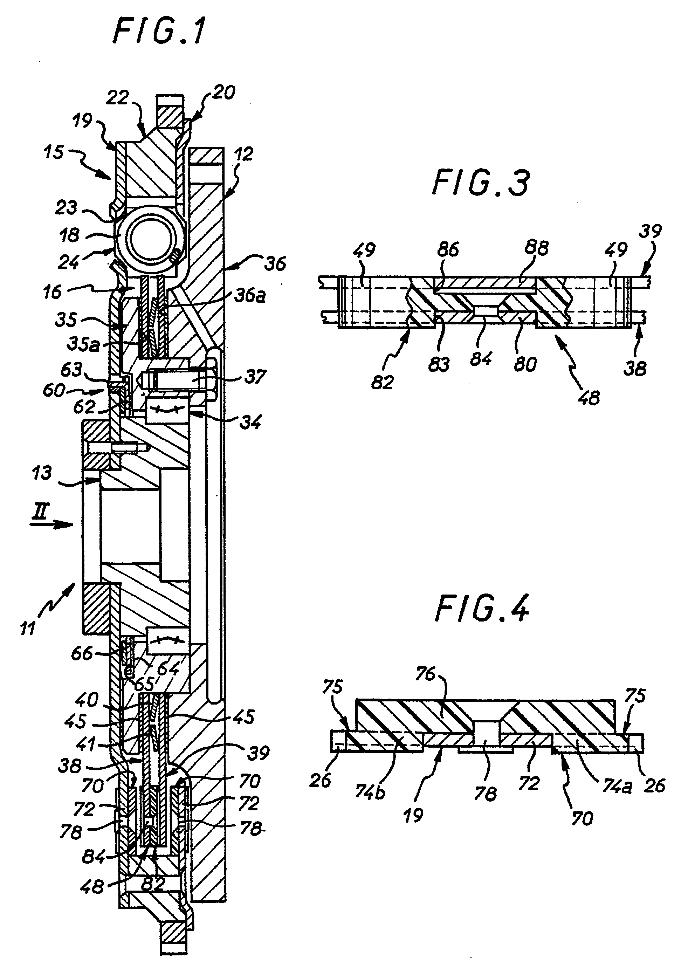

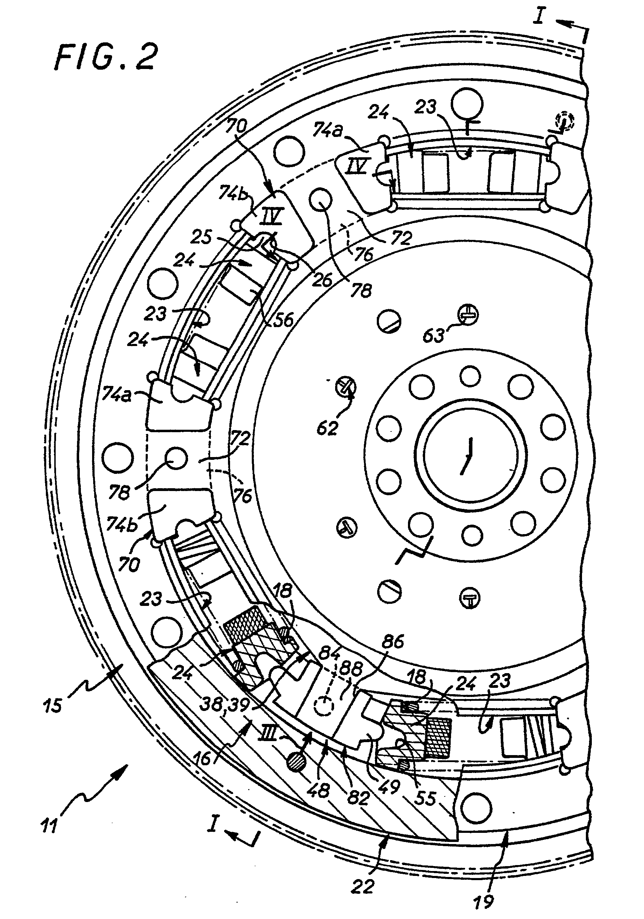

Pour ce qui concerne les voiles 38,39, chaque bras radial 48 mentionné ci-dessus se compose d'une simple patte radiale 80 découpée dans le voile métallique proprement dit et, pour au moins certaines pattes radiales, d'au moins une seconde pièce 82 en matériau élastomère ou synthétique, relativement rigide, fixée sur ladite patte radiale 80 et conformée pour y définir latéralement au moins un doigt 49 dont l'extrémité arrondie est susceptible d'entrer en contact articulé avec le fond d'une creusure 55 d'un socle 24 correspondant. Selon l'exemple, chaque seconde pièce 82 comporte deux doigts 49 opposés, raccordés à une partie médiane dans laquelle est définie une zone amincie comportant au moins une première rainure radiale 83 de forme et dimensions correspondant à celles d'une patte radiale 80. Cette première rainure permet donc l'encastrement de la pièce 82 sur la patte radiale 80 correspondante. La pièce 82 est en outre fixée à ladite patte radiale par un rivet 84 ou un moyen analogue. Outre les doigts 49, les bords sensiblement radiaux de chaque pièce 82 comportent deux portions inclinées l'une par rapport à l'autre, de part et d'autre du doigt 49 correspondant pour coopérer avec les facettes inclinées du socle correspondant. Comme cela est visible sur la figure 3, là encore, la surface de contact entre chaque doigt en matériau élastomère ou synthétique et le fond de la creusure 55 est sensiblement augmentée par rapport à celle obtenue avec l'agencement antérieur connu où le contact ne se faisait que par la tranche des doigts, directement découpés dans la tôle des voiles. Il en est de même, en fin d'articulation, entre lesdits bords sensiblement radiaux et lesdites facettes. Si le dispositif ne comporte pas de système de limitation de couple conforme à celui qui est représenté, un seul voile portant lesdites secondes pièces 82 est suffisant. Si en revanche, le système comporte un tel limiteur de couple nécessitant deux voiles parallèles, chaque seconde pièce 82 peut comporter, dans sa zone amincie, une seconde rainure radiale 86 opposée à la rainure 82 par laquelle ladite seconde pièce est fixée à l'un des voiles. La seconde rainure 86 est de forme et dimensions correspondant à une autre patte radiale 88 de l'autre voile. Dans l'exemple, le rivet 84 comporte deux têtes fraisées mais on pourrait aussi prévoir une tête normale du côté de la patte radiale 88 en ménageant un trou correspondant dans celle-ci, pour abriter la tête de rivet. La patte radiale 88 est librement encastrée (c'est-à-dire engagée avec possibilité de déplacement parallèlement à l'axe du dispositif) dans ladite seconde rainure 86. Les deux voiles 38, 39 sont ainsi maintenus circonférentiellement en correspondance correcte, toute rotation relative de l'un par rapport à l'autre étant empêchée par les liaisons de forme définies au niveau desdites secondes pièces 82. Le voile qui est engagé dans une sus-dite seconde rainure 86 peut se déplacer axialement pour compenser l'usure des garnitures 45, sans pouvoir pour autant s'échapper de cette rainure. Lesdites secondes pièces peuvent être toutes fixées à l'un des voiles; on peut aussi fixer une telle seconde pièce à une patte radiale sur deux, pour chaque voile. Dans ce dernier cas, les deux voiles sont alors rigoureusement identiques en fabrication.

## Revendications

1- Dispositif amortisseur de torsion, notamment dans un embrayage, du type comportant deux parties coaxiales (15, 16) montées avec possibilité de rotation limitée l'une par rapport à l'autre, une première partie comportant deux flasques (19, 20) annulaires sensiblement parallèles et une seconde partie comportant au moins un voile (38, 39) intercalé axialement entre les deux flasques et des ressorts (18) disposés sensiblement circonférentiellement entre des socles (24) montés sur l'une des parties, chaque socle comportant des premiers moyens d'engagement coopérant avec des moyens d'engagement complémentaires de l'une des parties et des seconds moyens d'engagement coopérant avec des moyens d'engagement complémentaires de l'autre partie, caractérisé en ce que lesdits moyens d'engagement complémentaires des flasques et/ou du ou des voiles sont constitués par des pièces rapportées (70, 82) en matériau élastomère ou synthétique, par exemple en matière plastique moulée relativement rigide.

2- Dispositif amortisseur de torsion selon la revendication 1, du type dans lequel les deux flasques précités comportent des fenêtres (23) allongées circonférentiellement, deux fenêtres en regard ménagées respectivement dans les deux flasques abritant un ressort (18), lesdits socles (24) étant montés articulés entre les deux flasques, aux extrémités desdites fenêtres et chaque socle étant muni de tourillons (25) pivotant dans des encoches arrondies (26) définies sur deux bords sensiblement radiaux desdites fenêtres en regard, caractérisé en ce que des premières pièces (70) en matériau élastomère ou synthétique précité sont rapportées sur des portions radiales (72) desdits flasques pour définir les bords sensiblement radiaux desdites fenêtres, lesdites premières pièces (70) comportant lesdites encoches arrondies.

3- Dispositif amortisseur de torsion selon la revendication 2, caractérisé en ce que l'épaisseur d'une encoche arrondie (26) est supérieure à celle du flasque (19, 20) qui porte ladite première pièce dans laquelle est définie ladite encoche.

4- Dispositif amortisseur de torsion selon la revendication 2 ou 3, caractérisé en ce que chaque première pièce en matériau élastomère ou synthétique précité comporte deux parties opposées (74a, 74b) munie chacune d'une encoche arrondie correspondant respectivement à deux fenêtres (23) adjacentes d'un même flasque et une partie centrale de montage (76), comportant de préférence une zone amincie de forme et dimensions correspondant à celles d'une portion radiale précitée, ladite partie centrale de montage étant fixée (78) à une telle portion radiale (72).

5- Dispositif amortisseur de torsion selon l'une des revendications précédentes, du type dans lequel au moins un voile (38, 39) précité comporte des bras radiaux munis chacun de deux doigts opposés s'étendant sensiblement suivant une direction circonférentielle, chaque doigt (49) étant adapté à entrer en contact pivotant, par une extrémité arrondie, avec un creusure (55) à fond arrondi d'un socle précité, caractérisé en ce que des secondes pièces en matériau élastomère ou synthétique (82) sont rapportées sur des bras radiaux dudit voile et conformées pour y définir au moins lesdits doigts.

6- Dispositif amortisseur de torsion selon la revendication 5, caractérisé en ce que chaque seconde pièce (82) en matériau élastomère ou synthétique comporte deux doigts (49) opposés précités raccordés à une partie médiane dans laquelle est définie une zone amincie comportant une première rainure radiale (83) de forme et dimensions correspondant à celles d'une patte radiale (80) dudit voile, ladite seconde pièce étant engagée par cette première rainure sur ladite patte radiale et fixée à celle-ci.

7- Dispositif amortisseur de torsion selon la revendication 6, du type comportant deux voiles parallèles (38, 39) entre lesquels sont disposés des moyens élastiques (40, 41) repoussant lesdits voiles en direction de portées respectives parallèles de ladite seconde partie (16), de préférence avec interposition de garnitures de friction (45), cet agencement constituant un limiteur de couple, caractérisé en ce que la zone amincie précitée de chaque seconde pièce (82) en matériau élastomère ou synthétique comporte une seconde rainure (86) opposée à ladite première rainure (83) par laquelle elle est fixée à l'un des voiles et en ce que ladite seconde rainure est de forme et dimensions correspondant à celles d'une patte radiale (88) de l'autre voile, une telle patte radiale étant librement encastrée dans ladite seconde rainure.

8- Dispositif amortisseur selon la revendication 4, caractérisé en ce que chaque première pièce (70) précitée admet un plan de symétrie médian.

**Patentansprüche**

1. Torsionsdämpfeinrichtung, insbesondere für eine Kupplung, von der Art, die zwei koaxiale Teile (15, 16) aufweist, welche mit der Möglichkeit zur begrenzten Drehung im Verhältnis zueinander angebracht sind, wobei ein erster Teil zwei ringförmige und im wesentlichen parallel verlaufende Flansche (19, 20) und ein zweiter Teil wenigstens eine Abdeckung (38, 39) enthält, die axial zwischen den beiden Flanschen eingesetzt ist, sowie Federn (18), die im wesentlichen am Umfang zwischen Sockeln (24) angeordnet sind, wobei jeder Sockel erste Eingriffsmittel aufweist, die mit ergänzenden Eingriffsmitteln des einen Teils zusammenwirken, sowie zweite Eingriffsmittel, die mit ergänzenden Eingriffsmitteln des anderen Teils zusammenwirken, dadurch gekennzeichnet, daß die genannten ergänzenden Eingriffsmittel der Flansche und/oder der Abdeckung(en) aus angesetzten Stücken (70, 82) aus Elastomer oder Kunststoff bestehen, z.B. aus relativ harter Kunststoffpreßmasse.

2. Torsionsdämpfeinrichtung nach Anspruch 1, von der Art, bei der die beiden vorgenannten Flanschen am Umfang längliche Fenster (23) aufweisen, wobei zwei Fenster einander gegenüberliegend in den beiden Flanschen vorgesehen sind und eine Feder (18) aufnehmen, während die genannten Sockel (24) gelenkig zwischen den beiden Flanschen an den Enden der genannten Fenster angebracht sind und jeder Sockel mit Drehzapfen (25) versehen ist, die in abgerundeten Einschnitten (26) schwenkbar sind, welche an zwei im wesentlichen radialen Kanten der genannten einander gegenüberliegenden Fenster angeordnet sind, dadurch gekennzeichnet, daß erste Stücke (70) aus dem vorgenannten Elastomer oder Kunststoff an radialen Abschnitten (72) der genannten Flansche angebracht sind, um im wesentlichen radiale Kanten der genannten Fenster zu begrenzen, wobei die genannten ersten Stücke (70) die genannten abgerundeten Einschnitte aufweisen.

3. Torsionsdämpfeinrichtung nach Anspruch 2, dadurch gekennzeichnet, daß die Dicke eines abgerundeten Einschnitts (26) größer ist als die des Flanschs (19, 20), der das genannte erste Stück trägt, worin der genannte Einschnitt vorgesehen ist.

4. Torsionsdämpfeinrichtung nach Anspruch 2 oder 3, dadurch gekennzeichnet, daß jedes erste Stück aus dem vorgenannten Elastomer oder Kunststoff zwei einander gegenüber liegende Teile (74a, 74b) enthält, die jeweils mit einem abgerundeten Einschnitt versehen sind, welcher zwei angrenzenden Fenstern (23) eines gleichen Flanschs entspricht, und mit einem Montage-Mittelteil (76), vorzugsweise mit einer dünnen Zone, deren Form und Abmessungen denjenigen eines vorgenannten radialen Abschnitts entsprechen, wobei der genannte Montage-Mittelteil (78) an einem solchen radialen Abschnitt (72) befestigt ist.

5. Torsionsdämpfeinrichtung nach einem der vorherigen Ansprüche, von der Art, bei der wenigstens eine vorgenannte Abdeckung (38, 39) radiale Arme aufweist, die jeweils mit zwei einander gegenüber liegenden, im wesentlichen umfangsgerichteten Zapfen versehen sind, wobei jeder Zapfen (49) geeignet ist, mittels eines abgerundeten Endes in Schwenkkontakt mit einer Aushöhlung (55) mit abgerundetem Boden eines vorgenannten Sockels in Kontakt zu treten, dadurch gekennzeichnet, daß zweite Stücke aus Elastomer oder Kunststoff (82) an radialen Armen der genannten Abdeckung angebracht und so ausgebildet sind, daß sie dort wenigstens die genannten Zapfen begrenzen.

6. Torsionsdämpfeinrichtung nach Anspruch 5, dadurch gekennzeichnet, daß jedes zweite Stück (82) aus Elastomer oder Kunststoff zwei vorgenannte, einander gegenüberliegende Zapfen (49) aufweist, die mit einem mittleren Teil verbunden sind, in dem eine dünne Zone liegt, welche eine erste radiale Nut (83) enthält, deren Form und Abmessungen denjenigen einer radialen Lasche (80) der genannten Abdeckung entsprechen, wobei das genannte zweite Stück mittels dieser ersten Nut an der genannten radialen Lasche eingreift und daran befestigt ist.

7. Torsionsdämpfeinrichtung gemäß Anspruch 6, von der Art, die zwei parallel verlaufende Abdeckungen (38, 39) aufweist, zwischen denen elastische Mittel (40, 41) angeordnet sind, die die genannten Abdeckungen in Richtung jeweils parallel verlaufender Flächen des genannten zweiten Teils (16) drücken, vorzugsweise unter Einfügung von Reibbelägen (45), wobei diese Anordnung einen Drehmomentbegrenzer bildet, dadurch gekennzeichnet, daß die vorgenannte dünne Zone jedes zweiten Stücks (82) aus Elastomer oder Kunststoff eine zweite Nut (86) enthält, die der genannten ersten Nut (83) gegenüberliegt und wodurch sie an einer der Abdeckungen befestigt ist, und daß die genannte zweite Nut eine Form und Abmessungen aufweist, die denen einer radialen Lasche (88) der anderen Abdeckung entsprechen, wobei eine derartige radiale Lasche frei in der genannten zweiten Nut eingelassen ist.

8. Dämpfeinrichtung nach Anspruch 4, dadurch gekennzeichnet, daß jedes vorgenannte erste Stück (70) eine mittlere Symmetrieebene zuläßt.

**Claims**

1. A torsional damper device, especially for a clutch, of the kind comprising two coaxial parts (15, 16) mounted with the possibility of a limited degree of rotation relative to each other, a first part comprising two substantially parallel annular flanges (19, 20) and a second part comprising at least one plate (38, 39) disposed axially between the two flanges, and springs (18) disposed substantially circumferentially between base members (24) mounted on one of the parts, each base member comprising first engagement means cooperating with complementary engagement means on one of the parts and second engagement means cooperating with complementary engagement means on the other part, characterized in that the said complementary engagement means of the flanges and/or of the plate or plates consist of attached separate pieces (70, 82) made of an elastomer or synthetic material, for example of relatively rigid moulded plastic.

2. A torsional damper device according to Claim 1, of the kind in which the two above mentioned flanges comprise circumferentially elongated windows (23), two facing windows made respectively in the two flanges accommodate a spring (18), the said base members (24) are pivotably mounted between the two flanges at the ends of the said windows and each base member is equipped with journal members (25) which pivot in rounded notches (26) disposed on two substantially radial edges of the said facing windows, characterized in that above mentioned first separate pieces (70) made of an elastomer or synthetic material are attached to radial portions (72) of the said flanges to form the substantially radial edges of the said windows, the said first pieces (70) comprising the said rounded notches.

3. A torsional damper device according to Claim 2, characterized in that the thickness of a rounded notch (26) is greater than that of the flange (19, 20) which carries the said first piece in which the said notch is formed.

4. A torsional damper device according to Claim 2 or 3, characterized in that each of the above mentioned first separate pieces made of an elastomer or synthetic material comprises two opposed parts (74a, 74b) each incorporating a rounded notch, corresponding respectively to two adjacent windows (23) of the same flange, and a central mounting part (76) preferably comprising an area of reduced thickness having a shape and size corresponding to those of one of the above mentioned radial portions, the said central mounting part being attached (78) to such a radial portion (72).

5. A torsional damper device according to one of the preceding Claims, of the kind in which at least one of the above mentioned plates (38, 39) comprises radial arms each having oppositely directed substantially circumferential fingers, each finger (48) being adapted to make pivoting contact, by means of a rounded end, with a hollow (55) having a rounded bottom in an above mentioned base member, characterized in that the second pieces made of an elastomer or synthetic material (82) are attached to the radial arms of the said plate and are shaped to define at least the said fingers there.

6. A torsional damper device according to Claim 5, characterized in that each second piece (82) made of an elastomer or synthetic material comprises two of the said oppositely directed fingers (49) attached to a central part which incorporates an area of reduced thickness comprising a first radial groove (83) having a shape and size corresponding to those of a radial lug (80) on the said plate, the said separate piece being engaged and fixed on the said lug by this first groove.

7. A torsional damper device according to Claim 6 of the kind comprising two parallel plates (38, 39) between which spring means (40, 41) are disposed which push the said plates apart towards respective parallel bearing surfaces on the said second part (16), preferably with friction facings (45) being interposed, this arrangement constituting a torque limiter, characterized in that the above mentioned area of reduced thickness of each second piece (82) made of an elastomer or synthetic material comprises a second groove (86) opposed to the said first groove (83) by which it is fixed to one of the said plates, and in that the said second groove has a shape and size corresponding to those of a radial lug (88) on the other plate, such a radial lug being freely inserted in the said second groove.

8. A torsional damper device according to Claim 4, characterized in that each above mentioned first separate piece (70) has a median plane of symmetry.

*FIG.1*

*FIG.3*

*FIG.4*

FIG.2